# EUROPEAN PATENT APPLICATION

(11) **EP 4 783 339 A1**
(43) Date of publication of application: **29.07.2026**
(21) Application number: 25154320.3
(22) Date of filing: 28.01.2025
(51) Int. Cl.: H01M 50/367, H01M 50/30

(54) **BATTERY HOUSING WITH UNIDIRECTIONAL VENTING PATH**

(71) Applicant: Volvo Truck Corporation, 405 08 Göteborg (SE)
(72) Inventor: MOVAGHAR, Amirreza, SE-412 76 GÖTEBORG (SE); IRANNEZHAD, Mike, SE-413 30 GÖTEBORG (SE); LIND, Jonas, SE-415 71 GÖTEBORG (SE)
(74) Representative: Kransell & Wennborg KB

(57) **Abstract**

A battery housing (100) with integrated venting channels for distributing gas released during thermal runaway, the battery housing comprising: a first side venting channel (102) located on a first side (104) of the battery housing and configured to receive exhaust gas from a battery cell (106) in the event of thermal runaway; a busbar holder (108) connected to the battery housing, the busbar holder comprising a busbar venting channel (202, 302) integrated within the busbar holder; a first fluid connection (204) connecting the first side venting channel to a first opening (206, 306) of the busbar venting channel; a second fluid connection (208) connecting a second side venting channel (114) to a second opening (210, 310) of the busbar venting channel, allowing a gas flow from the first side venting channel, through the busbar holder venting channel and to the second side venting channel.

## Description

### TECHNICAL FIELD

The disclosure relates generally to a battery housing for an energy storage system in a vehicle. In particular aspects, the disclosure relates to a battery housing comprising an integrated venting channel. The disclosure can be applied to heavy-duty vehicles, such as trucks, buses, and construction equipment, among other vehicle types. The disclosure can also be applied to marine vessels and the like. Although the disclosure may be described with respect to a particular vehicle, the disclosure is not restricted to any particular vehicle.

### BACKGROUND

Energy storage systems are employed in a variety of applications, including transportation, renewable energy integration, and backup power installations. Such systems typically include multiple battery units working together to provide the desired electrical output. The ability to manage the electrical connections between individual units and the overall system is a crucial aspect of ensuring safe and efficient operation.

The compact configurations often required for energy storage installations can create challenges in accessing internal components. Features that improve the placement and secure connection of components during assembly or servicing are important for maintaining system reliability. Without such considerations, working with internal structures can become unnecessarily complex, impacting performance and efficiency.

Accordingly, there is a need for improved designs of energy storage systems.

### SUMMARY

According to a first aspect of the disclosure, it is provided a battery housing with integrated venting channels for distributing gas released during thermal runaway, the battery housing comprising: a first side venting channel located on a first side of the battery housing and configured to receive exhaust gas from a battery cell in the event of thermal runaway; a busbar holder connected to the battery housing, the busbar holder comprising a venting channel integrated within the busbar holder; a first fluid connection connecting the first side venting channel to a first opening of the busbar venting channel; a second fluid connection connecting a second side venting channel to a second opening of the busbar venting channel, allowing a gas flow from the first side venting channel, through the busbar holder venting channel and to the second side venting channel.

A technical benefit of the described battery housing may include the ability to manage and direct the flow of gas released during thermal runaway events, thereby preventing pressure buildup and reducing the risk of uncontrolled gas leakage within the battery housing. By incorporating the first and second side venting channels connected through a busbar holder venting channel, the battery housing can facilitate a controlled evacuation of high-temperature gases to reduce the impact of thermal runaway on surrounding components. The integrated venting channel within the busbar holder provides a space-saving design that both support the high-voltage busbar and distributes a gas flow, thereby utilizing the volume to the busbar to achieve increased volume for distributing and handling exhaust gas without increasing the overall volume of the battery housing.

Optionally in some examples, including in at least one preferred example, the first fluid connection is formed as a closed channel connecting the first side venting channel on the first side of the battery housing to the first opening of the busbar venting channel. A technical benefit may include preventing gas leaks and ensuring a controlled and efficient gas transfer path from the first side venting channel to the busbar venting channel. The closed channel configuration also provides control over the direction of gas flow.

Optionally, in some examples, including in at least one preferred example, the second fluid connection is formed as a closed channel connecting the second opening of the busbar venting channel to the second side venting channel on a second side of the battery housing, the second side being different from the first side. A technical benefit may include creating a dedicated, sealed path for gas flow to the second side of the battery housing, minimizing backflow and ensuring effective evacuation of gases. The direct connection between the second opening and the second side venting channel promotes efficient distribution of gas discharge.

Optionally, in some examples, including in at least one preferred example, the first opening comprises a venturi channel configured to promote a gas flow from the first side venting channel to the busbar venting channel. A technical benefit may include accelerating gas flow through the venturi effect, thereby improving the evacuation rate of gases into the busbar venting channel from the first side venting channel. The configuration of the venturi channel helps to lower pressure at the entry point, increasing the efficiency of the venting process.

Optionally, in some examples, including in at least one preferred example, the second opening comprises a venturi channel configured to promote a gas flow from the busbar venting channel to the second side venting channel. A technical benefit may include increasing the velocity of gases exiting the busbar venting channel while maintaining a controlled flow rate. The venturi channel can help guide gas discharge efficiently toward the second side venting channel while minimizing turbulence and backpressure.

Optionally, in some examples, including in at least one preferred example, the busbar venting channel of the busbar holder is fluidly connected to all four adjacent sides of a battery housing having a rectangular cross-section. A technical benefit may include allowing gas evacuation from multiple sides of the battery housing, improving overall pressure equalization and minimizing the risk of localized pressure buildup. Fluid connections to all four adjacent sides enhance redundancy, ensuring that gases are directed away from sensitive components regardless of the thermal runaway source.

Optionally, in some examples, including in at least one preferred example, the busbar venting channel comprises at least one venturi channel configured to promote a gas flow from the first side venting channel to the busbar venting channel and at least one venturi channel configured to promote a gas flow from the busbar venting channel to the side venting channel on each of the four sides of the busbar holder. A technical benefit may include consistent and balanced gas flow dynamics across all four sides of the busbar holder. The combination of venturi channels configured to promote a gas flow from the first side vent channel to the busbar venting channel and further on to the second venting channel helps optimize the intake and exhaust of gases, improving evacuation efficiency while maintaining stable internal pressure conditions.

Optionally, in some examples, including in at least one preferred example, the busbar venting channel comprises a continuous circumferential channel portion fluidly connecting the busbar holder to all four sides of the battery housing.
A technical benefit may include forming a unified gas distribution network around the perimeter of the battery housing, which can facilitate uniform gas evacuation and prevent gas accumulation in specific areas, regardless of in which battery cell thermal runaway occur.

Optionally, in some examples, including in at least one preferred example, the circumferential channel portion is fluidly connected to a particle trapping compartment of the busbar venting channel, the particle trapping compartment comprising a particle trapping structure. A technical benefit may include enabling the removal of harmful particles from the gas stream at multiple points around the circumference of the battery housing. The connection to a particle trapping compartment helps prevent particles from reaching critical electrical components, reducing the risk of contamination or electrical failure.

Optionally, in some examples, including in at least one preferred example, the circumferential channel portion is fluidly connected to a particle trapping compartment of the busbar venting channel, the circumferential channel portion comprising a separate fluid connection to the particle trapping compartment for each adjacent side of the battery housing. A technical benefit may include increasing the particle trapping capacity by distributing the gas flow to separate trapping compartments for each side of the housing. This configuration can help avoid clogging at a single location and ensures more efficient filtration of particles during thermal runaway events.

Optionally, in some examples, including in at least one preferred example, the busbar venting channel comprises a particle trapping structure. A technical benefit may include filtering out solid particles from the gas stream, which helps to protect internal components, such as busbars and electrical connections, from debris. The particle trapping structure enhances system safety by mitigating the risk of particle-induced electrical faults.

Optionally, in some examples, including in at least one preferred example, the particle trapping structure is arranged between the first opening and the second opening of the busbar venting channel. A technical benefit may include intercepting particles in the busbar holder, ensuring that particles are prevented from traveling further through the venting system and out of the battery housing.

Optionally, in some examples, including in at least one preferred example, the particle trapping structure comprises at least one grid configured to trap particles while allowing a gas flow through the grid. A technical benefit may include providing an effective yet low-resistance filtration mechanism that allows gas to pass freely while capturing larger solid particles. The use of a grid structure ensures minimal disruption to the overall venting flow.

Optionally, in some examples, including in at least one preferred example, the particle trapping structure comprises a grid having openings in a central portion of the particle trapping structure and is closed in distal portions of the particle structure in a horizontal direction. A technical benefit may include directing gas flow predominantly through the central portion of the grid while limiting flow through the distal portions to enhance particle retention. This design can help distribute gas flow more evenly and reduce the risk of particles bypassing the trapping structure.

Optionally, in some examples, including in at least one preferred example, the particle trapping structure comprises a plurality of grids having a uniform opening size. A technical benefit may include providing consistent particle filtration across multiple layers of grids. The uniformity in opening size ensures predictable performance and reduces the risk of clogging or uneven flow distribution.

Optionally, in some examples, including in at least one preferred example, the opening size of the grid is based on a known particle size distribution for a selected cell chemistry. A technical benefit may include tailoring the filtration performance of the grid to match the expected particle characteristics of specific battery chemistries, such as NMC or LFP. This customization enhances the effectiveness of the particle trapping structure for different types of thermal runaway scenarios.

Optionally, in some examples, including in at least one preferred example, the busbar venting channel comprises a circulation zone configured to store trapped particles in the event of thermal runaway. A technical benefit may include providing a designated area within the venting system for the accumulation and retention of trapped particles. This prevents the trapped particles from being reintroduced into the gas flow and minimizes the risk of further system contamination.

Optionally, in some examples, including in at least one preferred example, the busbar holder is configured to hold a high-voltage busbar and to be connected to the battery housing. A technical benefit may include consolidating the high-voltage busbar and the venting channel into a single component, reducing the overall size and complexity of the battery housing assembly. This integration improves assembly efficiency and reduces the risk of alignment issues during installation.

Optionally, in some examples, including in at least one preferred example, the battery housing further comprises a vent outlet allowing a gas flow out of the battery housing. A technical benefit may include enabling the controlled discharge of gases to the external environment, preventing pressure buildup and maintaining the integrity of the battery housing. The vent outlet serves as a final evacuation point, which enhances the overall safety of the system.

Optionally in some examples, including in at least one preferred example, it is provided a vehicle comprising a battery housing according to any one of the preceding examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIGs. 1A-C** are schematic views of exemplary battery housings according to an example.
**FIG. 2** is an exemplary busbar holder of a battery housing according to an example.
**FIG. 3** is an exemplary busbar holder of a battery housing according to an example.
**FIG. 4** is an exemplary busbar holder of a battery housing according to an example.
**FIG. 5** is a vehicle comprising an exemplary battery housing according to an example.

### DETAILED DESCRIPTION

The detailed description set forth below provides information and examples of the disclosed technology with sufficient detail to enable those skilled in the art to practice the disclosure.

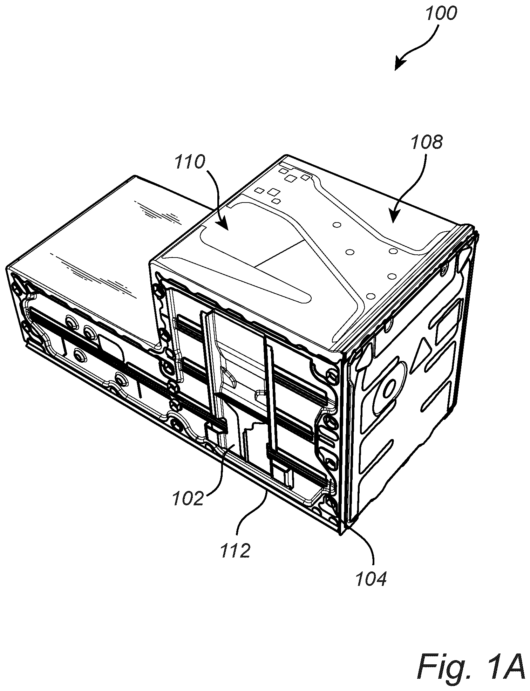

Figs. 1A-C schematically illustrate an exemplary battery housing 100 with integrated venting channels for distributing gases released during thermal runaway is illustrated. The battery housing 100 is designed to enhance the safety of the battery system by providing controlled evacuation of high-temperature gases and particles generated in the event of a thermal runaway incident.

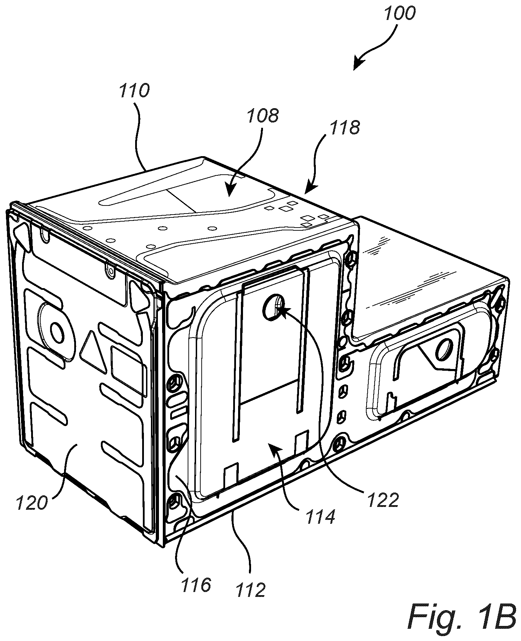

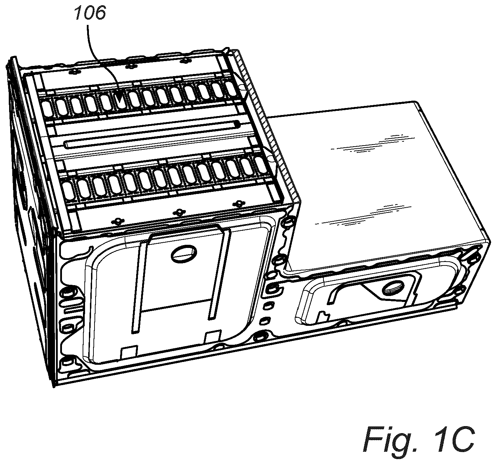

The battery housing 100 comprises a first side venting channel 3 located on a first side 104 of the battery housing 100 as illustrated in Fig. 1A. Fig. 1B illustrates an opposing second side 116 of the battery housing 100 comprising a second side venting channel 114. The first side venting channel 102 is configured to receive exhaust gas from a battery cell 106 in the event of thermal runaway as illustrated in Fig 1C. The first side venting channel 102 extends along the sidewall of the housing to facilitate the collection and channeling of gases released by the affected battery cell 106. In the illustrated example, the battery cell has a breakable vent opening at the top of the battery cell and exhaust gas ejected from a battery cell under thermal runaway is guided to the first side venting channel. It should be noted that many different configurations of battery cells are possible, such as battery modules arranged in a plurality of layers, as long as exhaust gases from battery cells are guided to a first side venting channel 104.

The battery housing illustrated in Fig. 1A-C further comprises a busbar holder 108 connected to the battery housing 100, the busbar holder 108 being configured to support a high-voltage busbar providing power distribution in the battery housing (not shown in Fig. 1A). In the illustrated example, the busbar holder 108 is connected to a top side 110 of the battery housing, but the busbar holder 108 could in principle also be connected to a bottom side 112 of the battery housing 100. The battery housing further comprises a vent outlet 122 allowing a gas flow out of the battery housing 100.

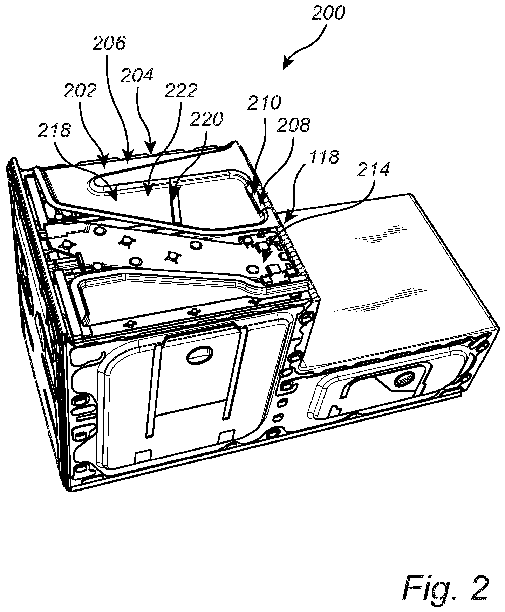

Fig. 2 illustrates a first internal configuration of a venting system 200 of a busbar holder 108 comprising an integrated venting channel 202 that extends through the busbar holder 108, providing a gas flow path for the exhaust gases received from the first side venting channel 102. A first fluid connection 204 connects the first side venting channel 102 to a first opening 206 of the busbar venting channel 202. The first fluid connection 204 serves as a conduit for directing gas flow from the first side venting channel 102 into the busbar venting channel 202. The first opening 206 is positioned to facilitate a smooth transition of gas into the busbar venting channel 202, ensuring minimal pressure drop and turbulence.

A second fluid connection 208 connects a second side venting channel 114 to a second opening 210 of the busbar venting channel 202. The second fluid connection 208 directs gas flow from the busbar venting channel 202 to the second side venting channel 114, which is located on a second side 116 of the battery housing 100. The arrangement of the first and second fluid connections 204, 208 allows the gases to pass from the first side venting channel 102, through the busbar holder venting channel 202, and into the second side venting channel 114, forming a continuous and controlled flow path.

An advantage of the busbar holder 108 is that the first opening 206 (inlet) and the second opening 210 (outlet) of the busbar venting channel 202 are located on different sides of the battery housing 100. This configuration promotes cross-flow ventilation, enabling gases to be directed from one side of the battery housing to the opposite side. By positioning the inlet and outlet on different sides, the busbar holder 108 ensures that exhaust gases are distributed along a longer flow path, which facilitates more efficient gas evacuation and reduces the risk of localized pressure buildup near the source of the thermal runaway event. The skilled person readily realizes that many different configurations of a venting system for the busbar holder are possible while maintaining the described advantages.

The first side venting channel 102 is seen as the side venting channel from which exhaust gas from a thermal runaway event is provided to the busbar holder 108, and the second side venting channel 114 is seen as the side venting channel receiving the exhaust gas from the busbar holder 108, where the first side venting channel 102 and second side venting channel 114 are located on different sides of the battery housing 100.

In the example configuration 200 illustrated in Fig. 2, the first fluid connection 204 is formed as a closed channel connecting the first side venting channel 102 on the first side 104 of the battery housing 100 to the first opening 206 of the busbar venting channel 202. There is thereby no fluid connection between the first side venting channel 102 and the second side venting channel 114. Moreover, the illustrated gas flow reaches the second venting channel via a third side of the battery housing, thereby allowing the busbar 214 to be connected between a third side a 118 and a fourth side 120 of the battery housing 100. The closed channel design ensures that the gas flow is directed in a controlled manner, preventing any gas leakage into the internal compartments of the battery housing or adjacent components such as the busbar 214. By creating a sealed path, the first fluid connection 204 helps maintain a stable and efficient flow of exhaust gas from the thermal runaway source to the busbar venting channel 202, minimizing any potential disruption in the venting process caused by environmental influences or pressure losses.

Similarly, the second fluid connection 208 is also formed as a closed channel connecting the second opening 210 of the busbar venting channel 202 to the second side venting channel 114 on the second side 116 of the battery housing 100, which is different from the first side 104. The connection between the second opening 210 and the second side venting channel 114 ensures that the exhaust gases are evacuated smoothly and efficiently toward the opposite side of the housing, in the illustrated example via a third side 118 of the housing. This configuration supports unidirectional venting and prevents gas stagnation within the housing, as the gases are drawn from one side and discharged from another.

The use of closed channels for both the first fluid connection 204 and second fluid connection 208 helps isolate the venting pathway from the high-voltage busbar 214 housed within the busbar holder 108.

The busbar holder of Fig. 2 further comprises a particle trapping compartment 218 having a particle trapping structure in the form of a grid 220 configured to capture particles in the gas flow. The busbar holder 108 may also comprise one or more circulation zones 222 located in the busbar venting channel 202 and configured to store trapped particles in the event of thermal runaway.

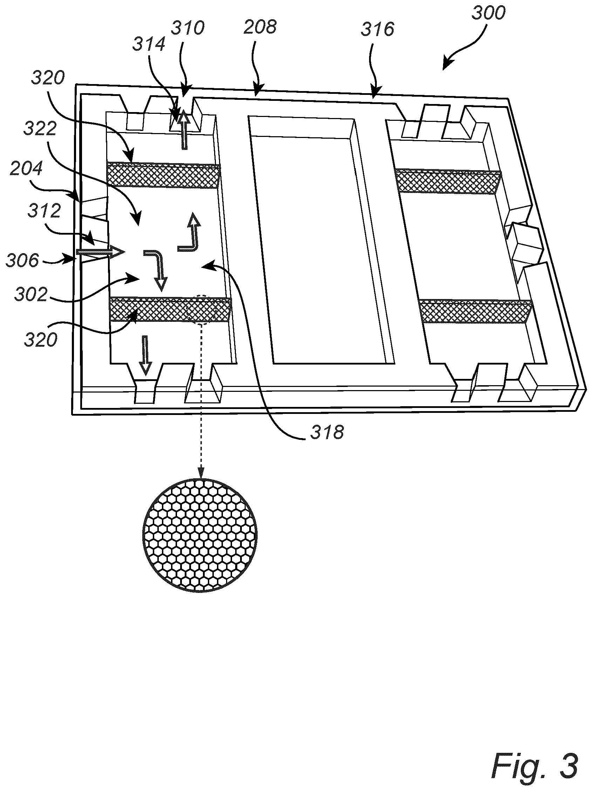

Referring now to Fig. 3, the detailed example of a busbar holder 108 comprising a venting system 300 and associated features are illustrated. The venting system 300 within the busbar holder 108 includes venturi channels and a particle trapping compartment 318 designed to enhance the efficiency and safety of gas evacuation during thermal runaway events.

In the illustrated examples, the first opening 306 comprises a venturi channel 312 configured to promote gas flow from the side venting channel 102 to the busbar venting channel 302. The converging venturi channel 312 gradually decreases in cross-sectional area in the direction from the side venting channel 102 towards the busbar venting channel 302, creating a low-pressure zone at the narrowest section of the venturi channel 312, thereby encouraging the inflow of gas from the first side venting channel 102. The second opening 310 comprises a venturi channel 314 with gradually decreasing cross-sectional area configured to promote gas flow from the busbar venting channel 302 to the second side venting channel 114. The converging shape of the venturi channel as seen in the direction from the busbar venting channel 302 towards the second side venting channel 114, i.e. in the gas flow direction, accelerates the gas flow as it exits the busbar venting channel 302, facilitating efficient evacuation. The direction of the gas flow is thereby controlled by the configuration of the venting system 300 so that gas enter and exit the busbar holder 108 on different sides of the battery housing 100.

In some implementations, and as illustrated in Fig. 3, the busbar venting channel 302 is fluidly connected to all four adjacent sides 104, 116, 118, 120 of the battery housing 100, which preferably has a rectangular cross-section as illustrated in Figs. 1A-C. This configuration allows the venting system to draw gas from or discharge gas to any of the four sides 104, 116, 118, 120, supporting effective pressure equalization across the entire housing 100. Accordingly, the first side venting channel 102 may be located on any of the four sides depending on where thermal runaway occur, and the second side venting channel 114 may in principle be any of the remaining three sides depending on the configuration of the busbar venting channel. While the rectangular cross-section provides an advantageous structure for symmetrical venting, alternative shapes, such as square, polygonal, or rounded cross-sections, may also be implemented to accommodate different battery housing designs. The venting system can be adapted to these shapes by appropriately positioning the venturi channels 312, 314 and fluid connections 204, 208 to ensure robust gas evacuation.

The venturi channels 312, 314 may advantageously be uniform in size and shape across the sides of the busbar holder 108 to ensure balanced and consistent gas flow dynamics throughout the venting system. This uniformity prevents flow imbalances that could lead to localized gas accumulation or uneven pressure distribution within the battery housing 100. By maintaining symmetry in the venturi channel design, the system provides uniform evacuation performance, regardless of the location of the thermal runaway event. Additionally, symmetrically arranged and configured venturi channels 312, 314 on all four sides 104, 116, 118, 120 help ensure that the venting system 300 can handle varying pressure levels without creating turbulence or backflow, further enhancing the stability and reliability of the gas evacuation process.

The busbar venting channel 302 illustrated in Fig. 3 comprises a continuous circumferential channel portion 316 fluidly connecting the busbar holder 108 to all four sides 104, 116, 118, 120 of the battery housing 100. This circumferential channel 316 forms an integrated channel that distributes the gas flow evenly around the perimeter of the housing. The continuous design eliminates dead zones where gases could otherwise accumulate and ensures that gas flow is directed toward the particle trapping compartment 318 regardless of the point of gas entry.

The particle trapping compartment 318 is integrated into the busbar holder 108 and forms part of the continuous venting structure. The particle trapping compartment 318 compartment includes a particle trapping structure here in the form of a particle trapping grid 320 designed to capture solid particles released during thermal runaway, preventing them from being carried further into the venting channels or external environment. The particle trapping grids 320 may all have a uniform opening size, and the opening size of the grid may be tailored to capture particles for a known particle size distribution in a selected cell chemistry. The integration of the particle trapping compartment 318 into the busbar holder 108 provides a compact and efficient design, consolidating gas evacuation and particle filtration functions into a single component. This arrangement reduces the number of separate parts in the system as well as improves space utilization.

The circumferential channel portion 316 may include a separate fluid connection to the particle trapping compartment 318 for each side 104, 116, 118, 120 of the battery housing 100, thereby enhancing the trapping efficiency by directing gas flows from different sides into distinct regions of the particle trapping compartment 318. In some examples, the particle trapping compartment 318 can be seen as the entire inner compartment of the busbar venting channel 202, 302.

The use of symmetrical venturi channels 312, 314, a continuous circumferential channel 316, and an integrated particle trapping compartment 318 ensures that the busbar holder 108 not only supports high-voltage electrical connections but also provides a robust and efficient gas evacuation and filtration system while supporting various housing shapes and enhances the safety and performance of the battery system in extreme conditions.

With reference to Fig. 3, several possible locations for circulation zones 322 within the busbar venting channel 202 of the busbar holder 108 are possible. The circulation zones 322 are areas where particles settle and are retained without re-entering the main gas flow path, with their placement depending on the gas flow direction.

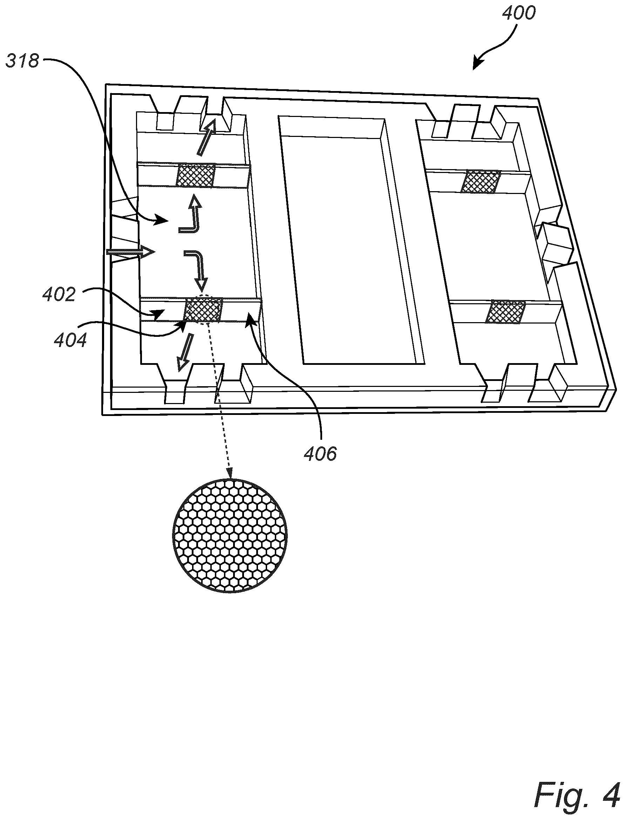

Referring to Fig. 4, an example particle trapping structure 402 within the particle trapping compartment 318 of the busbar holder 108 is illustrated. The particle trapping structure 402 is configured to filter and retain solid particles released during thermal runaway events while allowing gas to pass through.

The particle trapping structure 402 comprises openings in a central portion 404 of the particle trapping structure and is closed in distal portions 406 in a horizontal direction. The central portion 404 provides a pathway for the gas to pass through, while the distal portions 406 on either side of the grid in the horizontal plane are sealed. This configuration directs the majority of the gas flow through the central portion 404, where the openings are located, and prevents gas from bypassing the grid through the edges. As a result, solid particles entrained in the gas are forced toward the grid openings, where they are trapped.

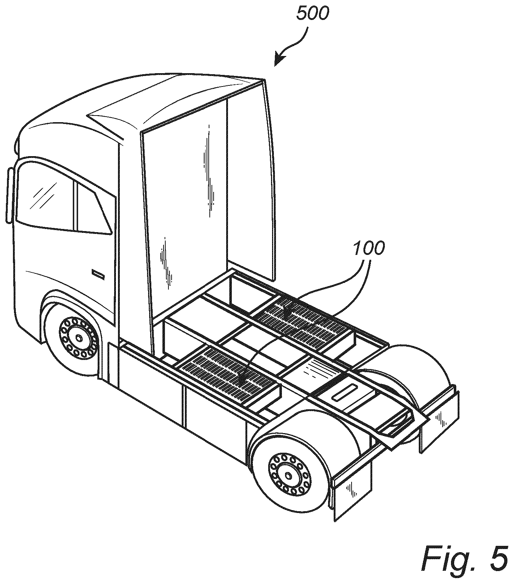

Fig. 5 is a schematic illustration of a vehicle 500 comprising a battery housing 100 according to any one of the preceding examples.

Example 1. A battery housing (100) with integrated venting channels for distributing gas released during thermal runaway, the battery housing comprising: a first side venting channel (102) located on a first side (104) of the battery housing and configured to receive exhaust gas from a battery cell (106) in the event of thermal runaway; a busbar holder (108) connected to the battery housing, the busbar holder comprising a busbar venting channel (202, 302) integrated within the busbar holder; a first fluid connection (204) connecting the first side venting channel to a first opening (206, 306) of the busbar venting channel; a second fluid connection (208) connecting a second side venting channel (114) to a second opening (210, 310) of the busbar venting channel, allowing a gas flow from the first side venting channel, through the busbar holder venting channel and to the second side venting channel.

Example 2. The battery housing according to claim 1, wherein the first fluid connection is formed as a closed channel connecting the first side venting channel (102) on the first side (104) of the battery housing to the first opening of the busbar venting channel.

Example 3. The battery housing according to claim 1 or 2, wherein the second fluid connection is formed as a closed channel connecting the second opening of the busbar venting channel to the second side venting channel (114) on a second side (116) of the battery housing, the second side being different from the first side.

Example 4. The battery housing according to claim 1, wherein the first opening comprises a venturi channel (312) configured to promote a gas flow from the first side venting channel to the busbar venting channel

Example 5. The battery housing according to claim 1 or 4, wherein the second opening comprises a venturi channel (314) configured to promote a gas flow from the busbar venting channel to the second side venting channel.

Example 6. The battery housing according to claim 1, 4 or 5, wherein the busbar venting channel of the busbar holder is fluidly connected to all four adjacent sides (104, 116, 118, 120) of a battery housing having a rectangular cross-section.

Example 7. The battery housing according to claim 1, 4 or 5, wherein the busbar venting channel comprises at least one venturi channel (312) configured to promote a gas flow from the first side venting channel to the busbar venting channel and at least one venturi channel (314) configured to promote a gas flow from the busbar venting channel to the second side venting channel on each of the four sides of the busbar holder.

Example 8. The battery housing according to claim 6 or 7, wherein the busbar venting channel comprises a continuous circumferential channel portion (316) fluidly connecting the busbar holder to all four sides of the battery housing.

Example 9. The battery housing according to claim 8, wherein the circumferential channel portion is fluidly connected to a particle trapping compartment (318) of the busbar venting channel, the particle trapping compartment comprising a particle trapping structure (320, 402).

Example 10. The battery housing according to claim 9, wherein the circumferential channel portion is fluidly connected to a particle trapping compartment of the busbar venting channel, the circumferential channel portion comprising a separate fluid connection to the particle trapping compartment for each adjacent side of the battery housing.

Example 11. The battery housing according to any one of the preceding claims, wherein the busbar venting channel comprises a particle trapping structure (318, 400).

Example 12. The battery housing according to any one of the preceding claims, wherein the particle trapping structure (220, 320) is arranged between the first opening (206, 306) and the second opening (210, 310) of the busbar venting channel.

Example 13. The battery housing according to any one of claims 9 to 12, wherein the particle trapping structure comprises at least one grid (318) configured to trap particles while allowing a gas flow through the grid.

Example 14. The battery housing according to any one of claim 13, wherein the particle trapping structure comprises a grid (402) having openings in a central portion (404) of the particle trapping structure and is closed in distal portions (406) of the particle structure in a horizontal direction.

Example 15. The battery housing according to claim 13 or 14, wherein the particle trapping structure comprises a plurality of grids having a uniform opening size.

Example 16. The housing according to claim 12 or 13, wherein an opening size of the grid is based on a known particle size distribution for a selected cell chemistry.

Example 17. The battery housing according to any one of the preceding claims, wherein the busbar venting channel comprises a circulation zone (222, 322) configured to store trapped particles in the event of thermal runaway.

Example 18. The battery housing according to any one of the preceding claims, wherein the busbar holder is configured to hold a high-voltage busbar and to be connected to the battery housing.

Example 19. The battery housing according to any one of the preceding claims, further comprising a vent outlet (122) allowing a gas flow out of the battery housing.

Example 20. A vehicle (500) comprising a battery housing (100) according to any one of the preceding examples.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery housing (100) with integrated venting channels for distributing gas released during thermal runaway, the battery housing comprising:
a first side venting channel (102) located on a first side (104) of the battery housing and configured to receive exhaust gas from a battery cell (106) in the event of thermal runaway;
a busbar holder (108) connected to the battery housing, the busbar holder comprising a busbar venting channel (202, 302) integrated within the busbar holder;
a first fluid connection (204) connecting the first side venting channel to a first opening (206, 306) of the busbar venting channel;
a second fluid connection (208) connecting a second side venting channel (114) to a second opening (210, 310) of the busbar venting channel, allowing a gas flow from the first side venting channel, through the busbar holder venting channel and to the second side venting channel.

2. The battery housing according to claim 1, wherein the first fluid connection is formed as a closed channel connecting the first side venting channel (102) on the first side (104) of the battery housing to the first opening of the busbar venting channel.

3. The battery housing according to claim 1 or 2, wherein the second fluid connection is formed as a closed channel connecting the second opening of the busbar venting channel to the second side venting channel (114) on a second side (116) of the battery housing, the second side being different from the first side.

4. The battery housing according to claim 1, wherein the first opening comprises a venturi channel (312) configured to promote a gas flow from the first side venting channel to the busbar venting channel

5. The battery housing according to claim 1 or 4, wherein the second opening comprises a venturi channel (314) configured to promote a gas flow from the busbar venting channel to the second side venting channel.

6. The battery housing according to claim 1, 4 or 5, wherein the busbar venting channel of the busbar holder is fluidly connected to all four adjacent sides (104, 116, 118, 120) of a battery housing having a rectangular cross-section.

7. The battery housing according to claim 1, 4 or 5, wherein the busbar venting channel comprises at least one venturi channel (312) configured to promote a gas flow from the first side venting channel to the busbar venting channel and at least one venturi channel (314) configured to promote a gas flow from the busbar venting channel to the second side venting channel on each of the four sides of the busbar holder.

8. The battery housing according to claim 6 or 7, wherein the busbar venting channel comprises a continuous circumferential channel portion (316) fluidly connecting the busbar holder to all four sides of the battery housing.

9. The battery housing according to claim 8, wherein the circumferential channel portion is fluidly connected to a particle trapping compartment (318) of the busbar venting channel, the particle trapping compartment comprising a particle trapping structure (320, 402).

10. The battery housing according to claim 9, wherein the circumferential channel portion is fluidly connected to a particle trapping compartment of the busbar venting channel, the circumferential channel portion comprising a separate fluid connection to the particle trapping compartment for each adjacent side of the battery housing.

11. The battery housing according to any one of the preceding claims, wherein the busbar venting channel comprises a particle trapping structure (318, 400).

12. The battery housing according to any one of the preceding claims, wherein the particle trapping structure (220, 320) is arranged between the first opening (206, 306) and the second opening (210, 310) of the busbar venting channel.

13. The battery housing according to any one of the preceding claims, wherein the busbar venting channel comprises a circulation zone (222, 322) configured to store trapped particles in the event of thermal runaway.

14. The battery housing according to any one of the preceding claims, wherein the busbar holder is configured to hold a high-voltage busbar and to be connected to the battery housing.

15. A vehicle (500) comprising a battery housing (100) according to any one of the preceding claims.
